# EUROPEAN PATENT SPECIFICATION

(11) **EP 0 310 392 B1**
(45) Date of publication and mention of the grant of the patent: **18.11.1993**
(21) Application number: 88309048.2
(22) Date of filing: 29.09.1988
(51) Int. Cl.: G11B 5/64, G11B 11/10

(54) **Magneto-optic memory medium**
Magnetooptisches Speichermedium
Milieu de mémoire magnéto-optique

(30) Priority: 30.09.1987 JP 248584/87
(43) Date of publication of application: 05.04.1989
(73) Proprietor: SHARP KABUSHIKI KAISHA, Osaka 545 (JP)
(72) Inventor: Miyake, Tomoyuki, Tenri-shi Nara-ken (JP); Murakami, Yoshiteru, Nishinomiya-shi Hyogo-ken (JP); Van, Kazuo, Nara-shi Nara-ken (JP); Takahashi, Akira, Nara-shi Nara-ken (JP); Mieda, Michinobu, Tenri-shi Nara-ken (JP); Ohta, Kenji, Kitakatsuragi-gun Nara-ken (JP)
(74) Representative: Brown, Kenneth Richard

(56) References cited:
- EP-A- 0 168 046
- EP-A- 0 275 189
- PATENT ABSTRACTS OF JAPAN, vol. 10, no. 188, p. 473, 2244, 03.07.86

## Description

The present invention relates to magneto-optic memory media.

In recent years, there has been active research in the area of optical disc techniques with the aim of developing a large-capacity high-density memory means. Attention has especially been directed to the use of magneto-optic media as rewritable memory media.

Magneto-optic media are divided generally into rare earth-transition metal amorphous alloys and crystalline Mn alloys (such as MnBi and MnBiCu). The former types of alloy predominantly attract attention from, for example, the viewpoint of grain boundary noise. Examples of rare earth-transition metal amorphous alloys are those having uniaxial magnetic anisotropy and which are usually prepared from a rare-earth metal, such as Gd, Tb or Dy and a transition metal, such as Fe or Co., by sputter or vacuum evaporation in the form of a thin film. Gd-Tb-Fe (or -Co) alloys are known as such alloys. See U.S. Patent "Magneto-Optic Memory Medium," No. 4,467,383 (or No. 4,610,912).

Data is magnetically written on or erased from the magneto-optic memory medium by the projection of a laser beam thereon at an elevated temperature near the Curie temperature (Tc). For smooth writing or erasure it is desirable for the medium to have the lowest possible Curie temperature (especially about 150°C) as long as the medium possesses record retentivity. Since magneto-optic pickups presently available employ semiconductor lasers having output powers, as low as about 10mW, it is desirable from the viewpoint of recording sensitivity that the medium have a low Curie point so that it is utilisable at low temperatures for magnetic recording.

It is also desirable for the medium to exhibit a coercive force-temperature characteristics curve which falls sharply at the largest possible angle around the Curie temperature in order to produce a distinct record pattern when data is written and to preclude bit trouble and diminish jitter.

The Gd-Tb-Fe (or FeCo) magneto-optic memory medium has the basic problem of having a relatively high Curie temperature (Tc). To lower the Curie temperature to about 150°C, it would appear to be useful to increase the Tb content, which serves to lower the Curie temperature to about 30 atom mol %. However, the composition then has an increased amount of Tb which is an expensive rare-earth metal and not readily available.

Unexamined Japanese Patent Publications SHO 59-84358 and SHO 60-128606 propose another option suggesting incorporating a small amount of Zr in the Gd-Tb-Fe (or -Co) alloy to provide a memory medium having the optical property of an increased Kerr rotation angle thereby improving the magnetic record pattern reading characteristics (S/N ratio). However, these publications do not mention the reduction in Curie temperature of the medium by the addition of Zr or the aforementioned sharply falling coercive force-temperature characteristics curve.

The present invention provides a magneto-optic memory medium of an amorphous alloy having uniaxial magnetic anisotropy and prepared by incorporating 2 to 15 atom mol % of yttrium Y into an alloy represented by the formula

(Gd_{α}Tb_{1-α})_{1-β}A_{β}

wherein A is a transition metal, and α and β satisfy the requirements of 0.5 ≦ α ≦ 0.7 and 0.6 < β ≦ 0.8.

The present invention provides the advantage that the presence of Y lowers the Curie temperature of the magneto-optical memory medium without impairing other characteristics thereof (such as coercive force and uniaxial magnetic anisotropy) and further permits the coercive force-temperature characteristics curve of the medium to have steeper falling characteristics. Accordingly, the medium of the invention is very useful as the memory film of optical discs, magneto-optic cards and tapes, etc.
Fig. 1 is a characteristics diagram of a magneto-optic memory medium of the composition [(Gd_{0.6}Tb_{0.4})_{0.28}-Fe_{0.72}]Y to show the relationship between the Y content and the Curie temperature (Tc);
Fig. 2 is a characteristics diagram of the same mangeto-optic memory medium as above to show the relationship between the Y content and the Kerr rotation angle;
Fig. 3 is a characteristics diagram of the same magneto-optic memory medium as above to show the Curie temperature and the coercive force (Hc) thereof at varying Y contents;
Fig. 4 is a diagram for illustrating a process for preparing the magneto-optic memory medium of the invention;
Fig. 5 is a diagram showing the construction of an optical disc incorporating the megneto-optic memory medium of the invention while the disc is being used for writing;
Fig. 6 is a diagram showing the construction of a magneto-optic card incorporating the magneto-optic memory medium of the invention;
Fig. 7 is a diagram showing the construction of a magneto-optic tape incorporating the megneto-optic memory medium of the invention; and
Fig. 8 is a characteristics diagram showing the relationship between the Curie temperature and the coercive force (Hc) as established by (Gd_{0.4}Tb_{0.6})_{0.30}Fe_{0.70} and (Gd_{0.6}Tb_{0.4})_{0.28}Fe_{0.72}.

The alloy for use in the invention is represented by the formula (Gd_{α}Tb_{1-α})_{1-β}A_{β} wherein α is in the range of 0.5 ≦ α ≦ 0.7. If α is greater than 0.7, the alloy has a lower coercive force and uniaxial magnetic anisotropy which are basic characteristics of the alloy and is therefore unsuitable. Further if α is less than 0.5, it is difficult to obtain an alloy having the contemplated Curie temperature, and the alloy is also therefore unsuitable. Within the above range, a preferred value of α is, for example, about 0.6 which gives a Gb to Tb ratio of about 3:2. In view of the coercive force, β is in the range of 0.6 < β ≦ 0.8, preferably 0.68 ≦ β ≦ 0.75.

Examples of the transition metal A include Fe and Co.

The amount of yttrium to be incorporated into the alloy is 2 to 15 atom mol % depending on the alloy. When the amount is less than 2 atom mol %, it is impossible to expect a substantial reduction in the Curie temperature. Amounts exceeding 15 atom mol % are not desirable in view of the uniaxial (vertical) magnetic anisotropy of the amorphous alloy. Preferably, the amount is between 3 and 12 atom mol %.

The magneto-optic memory medium of the invention is adapted to exhibit a Curie temperature of 150 to 180°C, preferably 150 to 160°C.

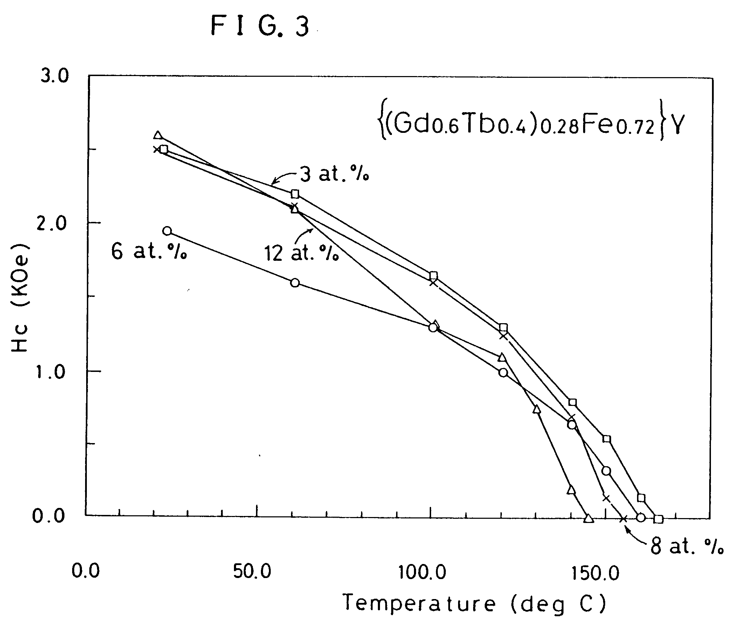

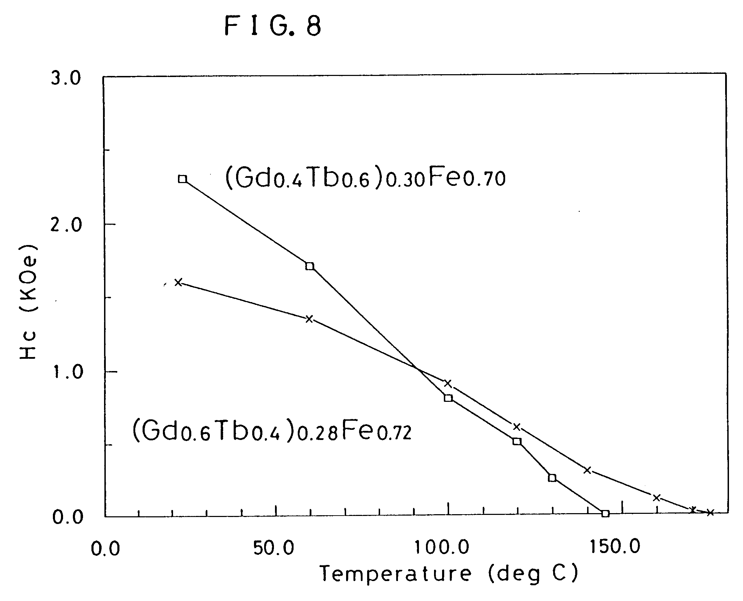

For example, when 3 atom mol % of yttrium is added to (Gd_{0.6}Tb_{0.4})_{0.8}Fe_{0.2}, the Curie temperature is lowered from about 175°C (see Fig. 8) to about 165°C (see Fig. 3).

Further the addition of 6 atom mol %, 8 atom mol % or 12 atom mol % of yttrium correspondingly lowers the Curie point by 15, 20 or 30°C to about 160, about 155 or about 145°C respectively.

### Examples

The magneto-optic memory medium of the invention can be prepared by processes already known.

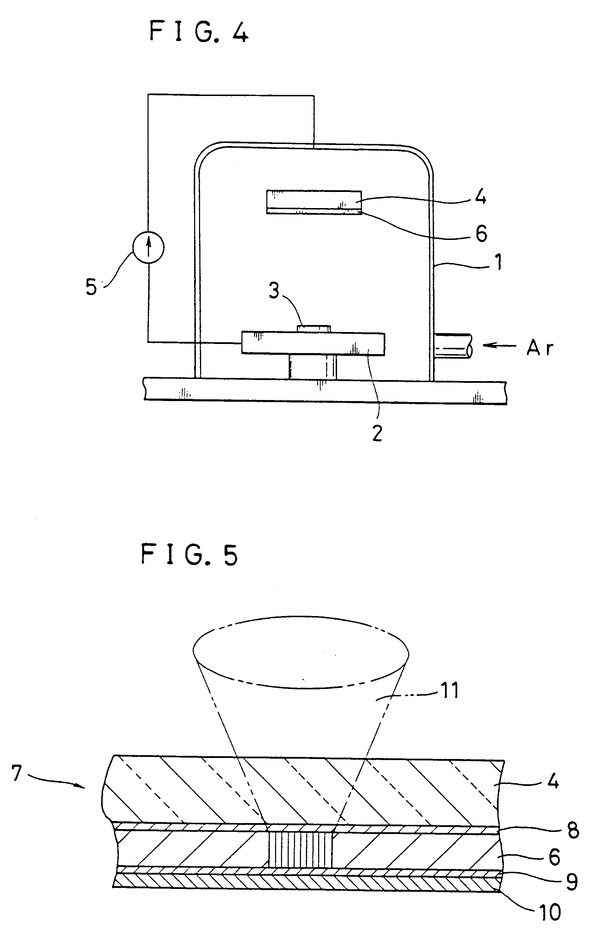

For example, a preferred process will be described below with reference to Fig. 4. A suitable substrate 4 (e.g. 1-mm-thick glass plate) formed with antioxidant film over the surface is placed within a sputtering chamber 1. An alloy plate 2 (e.g. disk of (Gd_{0.6}Tb_{0.4})_{0.28}Fe_{0.72}, inches (102mm/in diameter) prepared by melting in advance, and an yttrium chip 3 measuring, for example, 5 x 5 x 1 mm are arranged as targets in opposed relation to the substrate 4. The amount of yttrium to be incorporated into the resulting alloy is adjusted chiefly in accordance with the area of contact of the yttrium chip 3 with the alloy plate 2. The distance between the glass substate 4 and the alloy plate 2 is, for example, 60 mm.

A power supply 5 is connected to the chamber 1 and to the alloy plate 2.

The chamber 1 is evacuated by a vacuum pump to a high vacuum of up to 133.32 x 10⁻⁶Pa (1 x 10⁻⁶ torr) and an inert gas, such as argon gas, is then introduced into the chamber at all times. The pressure of the inert gas is preferably 133.322 Pa (10 torr). Subsequently, power (e.g. d.c. 150 W) is applied to the arrangement to effect sputtering.

In this way, a memory medium 6 of the invention can be formed which is, for example, 0.2µm(2000 angstroms) in thickness.
the memory medium of the invention thus prepared can be used as a memory medium for optical discs, magneto-optic cards, magneto-optic tapes, etc.

Fig. 5 shows an optical disc 7 prepared using the memory medium 6 of the invention. The optical disc 7 comprises a glass substrate 4 having an antioxidant film 8 of AlN (or AlSiN or SiN) thereon, the medium 6 of the invention formed over the film 8, a light-transmitting film 9 of AlN (or AlSiN or SiN) over the medium 6 and an Al reflecting film 10 over the film 9. The component films can be formed by conventional methods.

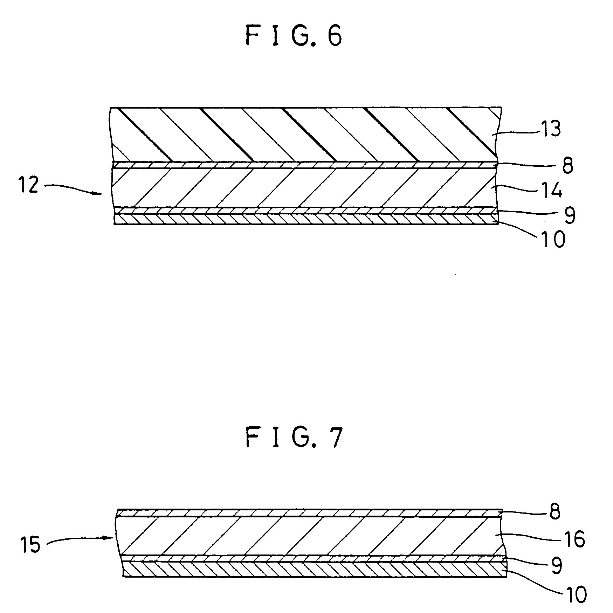

Fig. 6 shows a magneto-optic card 12 comprising an antioxidant film 8, memory medium 14 of the invention, light-transmitting film 9 and reflecting film 10 which are formed on a heat-resistant plastics substrate 13 one over another in the order mentioned as illustrated.

Fig. 7 shows a magneto-optic tape 15 comprising a memory medium 16 of the invention, light-transmitting film 9 and reflecting film 10 which are formed over an antioxidant film 8. The components of the tape can be formed also by conventional methods.

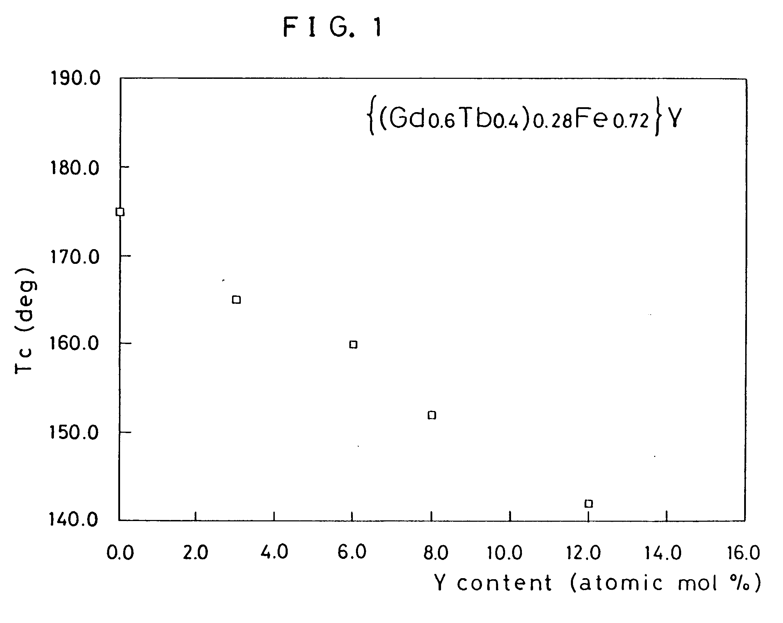

The magneto-optic memory medium of the invention prepared from the alloy (Gd_{0.6}Tb_{0.4})_{0.28}Fe_{0.72}Y was checked for variations in Curie temperature at varying yttrium contents, i.e. 3, 6, 8 and 12 atom mol %. Figs. 1 and 3 show the result. It is seen that the Curie temperature lowers to 165, 160, 155 and 145° C in succession with increasing yttrium content.

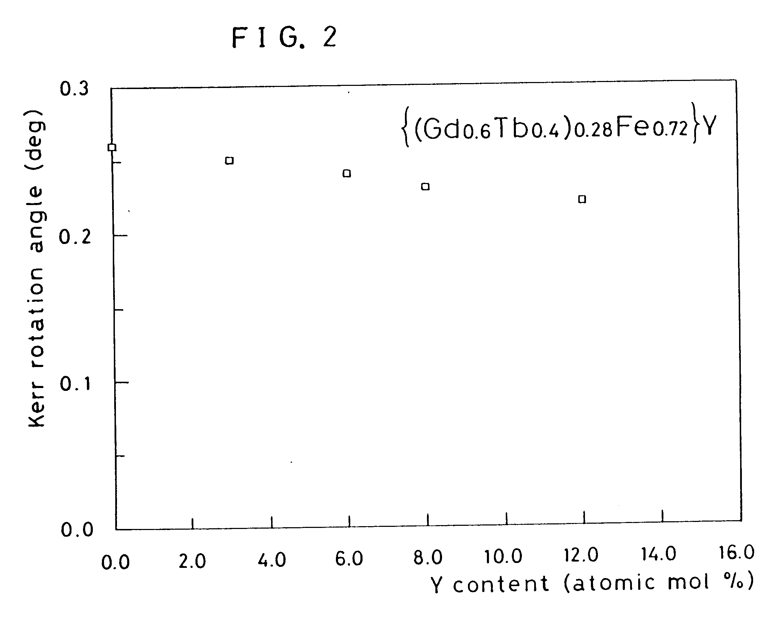

When checked also for Kerr rotation angle, the above memory medium was found to retain the desired Kerr rotation angle almost free of substantial variations despite the variations in yttrium content (see Fig. 2).

The magneto-optic memory medium of the invention, whose Curie temperature lowers with the Y content, further has a coercive force-temperature characteristics curve which around the Curie point, falls more steeply with an increase in Y content as illustrated in Fig. 3.

Additionally, the optical discs incorporating the memory medium of the invention were found satisfactorily usable for repeated writing and erasure.

Further (Gd_{0.6}Tb_{0.4})_{0.28}(Fe_{0.8}Co_{0.2})_{0.72} wherein Co is added in a ratio of γ = 0.25 relative to Fe exhibits the same characteristics as the foregoing embodiment when having yttrium incorporated therein.

## Claims

1. A magneto-optic memory medium of an amorphous alloy having uniaxial magnetic anisotropy and prepared by incorporating 2 to 15 atom mol % of yttrium Y into an alloy represented by the formula
(Gd_{α}Tb_{1-α})_{1-β}A_{β}
wherein A is a transition metal, and α and β satisfy the requirements of 0.5 ≦ α ≦ 0.7 and 0.6 < β ≦ 0.8.

2. A medium as defined in claim 1 wherein the transition metal is Fe, α and β are in the ranges of 0.5 ≦ α ≦ 0 6 and 0.68 ≦ β ≦ 0.75, and the amount of yttrium is 3 to 12 atom mol %.

3. A medium as defined in claim 1 wherein the transition metal is Co, α and β are in the ranges of 0.5 ≦ α ≦ 0.6 and 0.68 ≦ β ≦ 0.75, and the amount of yttrium is 3 to 12 atom mol %.

4. A medium as defined in claim 1 wherein the transition metal includes Fe and Co, and α and β are in the ranges of 0.5 ≦ α ≦ 0.6 and 0.68 ≦ β ≦ 0.75, the ratio γ of Co to Fe being in the range of 0 < γ ≦ 1, the amount of yttrium being 3 to 12 atom mol %.

5. An optical disc having a recording layer comprising a medium according to any one of claims 1 to 4.

6. A magneto-optic card having a recording layer comprising a medium according to any one of claims 1 to 4.

7. A magneto-optic tape having a recording layer comprising a medium according to any one of the claims 1 to 4.

## Patentansprüche

1. Magnetooptisches Speichermedium aus einer amorphen Legierung mit uniaxialer, magnetischer Anisotropie, das durch Einfügen von 2 bis 15 Atom-Mol% Yttrium Y in eine Legierung hergestellt wurde, die durch die folgende Formel repräsentiert wird:
(Gd_{α}Tb_{1-α})_{1-β}A_{β},
wobei A ein Übergangsmetall ist und α und β den Bedingungen 0,5 ≦ α ≦ 0,7 sowie 0,6 < β ≦ 0,8 genügen.

2. Medium nach Anspruch 1, bei dem das Übergangsmetall Fe ist, α und β sich in den Bereichen 0,5 ≦ α ≦ 0,6 sowie 0,68 ≦ β ≦ 0,75 befinden und die Menge an Yttrium 3 bis 12 Atom-Mol% beträgt.

3. Medium nach Anspruch 1, bei dem das Übergangsmetall Co ist, α und β in den Bereichen 0,5 ≦ α ≦ 0,6 sowie 0,68 ≦ β 0,75 liegen und die Menge an Yttrium 3 bis 12 AtomMol% beträgt.

4. Medium nach Anspruch 1 bei dem Fe und Co zum Übergangsmetall gehören, α und β in den Bereichen 0,5 ≦ α ≦ 0,6 sowie 0,68 ≦ β ≦ 0,75 liegen, das Verhältnis γ von Co zu Fe im Bereich von 0 ≦ γ ≦ 1 liegt, und die Menge an Yttrium 3 bis 12 Atom-Mol% beträgt.

5. Optische Platte mit einer Aufzeichnungsschicht mit einem Medium gemäß einem der Ansprüche 1 bis 4.

6. Magnetooptische Karte mit einer Aufzeichnungsschicht mit einem Medium gemäß einem der Ansprüche 1 bis 4.

7. Magnetooptisches Band mit einer Aufzeichnungsschicht mit einem Medium gemäß einem der Ansprüche 1 bis 4.

## Revendications

1. Support de mémoire magnéto-optique constitué d'un alliage amorphe présentant une anisotropie magnétique uniaxiale et préparé en incorporant 2 à 15 % en molès d'atomes d'yttrium y à un alliage représenté par la formule Suivante :
(Gd_{α}Tb_{1-α})_{1-β}A_{β}
dans laquelle A est un métal de transition et α et β satisfont aux conditions 0,5 ≦ α ≦ 0,7 et 0,6 < β ≦ 0,8.

2. Support selon la revendication 1, dans leqquel le métal de transition est Fe, α et β se situent dans les plages de 0,5 ≦ α ≦ 0,6 et 0,68 ≦ β ≦ 0,75 et la quantité d'yttrium est de 3 à 12 % en moles d'atomes.

3. Support selon la revendication 1, dans lequel le métal de transition est Co, α et β se situent dans les plages de 0,5 ≦ α ≦ 0,6 et 0,68 ≦ β ≦ 0,75, et la quantité d'yttrium est de 3 à 12 % en moles d'atomes.

4. Support selon la revendication 1, dans lequel le métal de transition comprend du Fe et du Co et α et β se situent dans les plages de 0,5 ≦ α ≦ 0 6 et 0,68 ≦ β ≦ 0,75, le rapport γ de Co à Fe se situant dans la plage de 0 < γ ≦ 1 et la quantité d'yttrium étant de 3 à 12 % en moles d'atomes.

5. Disque optique comportant une couche d'enregistrement comprenant un support selon l'une quelconque des revendications 1 à 4.

6. Carte magnéto-optique comportant une couche d'enregistrement comprenant un support selon l'une quelconque des revendications 1 à 4.

7. Ruban magnéto-optique comportant une Couche d'enregistrement comprenant un support selon l'une quelconque des revendications 1 à 4.
